# EUROPEAN PATENT SPECIFICATION

(11) **EP 2 698 722 B1**
(45) Date of publication and mention of the grant of the patent: **03.02.2016**
(21) Application number: 13154167.4
(22) Date of filing: 06.02.2013
(51) Int. Cl.: G06F 13/38, H04L 12/24

(54) **Expansion module and control method thereof**
Erweiterungsmodul und Steuerungsverfahren dafür
Module d'expansion et son procédé de commande

(30) Priority: 15.08.2012 TW 101129557
(43) Date of publication of application: 19.02.2014
(73) Proprietor: Acer Incorporated, New Taipei City 221 (TW)
(72) Inventor: Yeung, Sip Kim, 221 New Taipei City (TW)
(74) Representative: Becker Kurig Straus

(56) References cited:
- WO-A1-2009/049701
- CN-U- 202 150 947
- US-A1- 2011 080 910

## Description

### CROSS-REFERENCE TO RELATED APPLICATION

This application claims the priority benefit of Taiwan application serial no. 101129557, filed on August 15, 2012.

### BACKGROUND OF THE INVENTION

### Field of the Invention

The invention relates to an expansion module and a control method thereof, and especially to an expansion module and a control method thereof that solve the problem of using a plurality of network interfaces.

### Description of Related Art

With the advance of technology, the functions of computers tend to diversify, and a variety of new peripheral equipments are constantly introduced. To assist users in enhancing the capacity of computers or expanding the functions of computers more conveniently, the motherboard of the computers are generally equipped with expansion bus slots, such as an Accelerated Graphics Port (AGP), a Peripheral Component Interconnect (PCI), a PCI Express (PCI-E), for the users to insert expansion cards, such as a graphic card, a sound card or a network card. Besides, expansion bus interfaces such as a Firewire or a Universal Serial Bus (USB) are equipped in the computer case for the users to connect the computers with peripheral devices, such as a hard disk or a printer.

For a mobile electronic device such as a Notebook or a Tablet Personal Computer, a portable expansion device such as a docking station of a Notebook is developed in the related art in order to make the case body be developed and designed toward becoming lighter and thinner and increase the convenience and flexibility in the use of the mobile electronic device. The expansion device may include a peripheral device and an expansion card, providing the functions of the peripheral device and the expansion card to the mobile electronic device for use.

However, each of the expansion devices may have a network interface respectively to provide the network function. When the mobile electronic device is simultaneously connected with a plurality of expansion devices having network interfaces, network signals or network lines have to be provided to or connected with each of the network interfaces if the network interfaces of each of the expansion devices are used simultaneously. Thus, not only will the users feel inconvenient in use, but conflict may also occur between the plurality of network interfaces, making the expansion device incapable of providing the network function to the mobile electronic device properly.

WO2009/049701, CN202150947 and US2011/0080910 disclose to detect and to activate one of a plurality of available network interfaces.

### SUMMARY OF THE INVENTION

The present invention is defined by the appended claims.

An expansion module is provided herein, wherein the expansion module solves the problem when a plurality of network interfaces exists simultaneously.

A control method of the expansion module is provided herein, wherein the control method solves the problem when the expansion module has a plurality of network interfaces simultaneously.

An expansion module is introduced herein for providing expansion functions to a mobile electronic device, the expansion module including a cloud device and a first expansion device. The cloud device includes a first expansion bus interface and a first network interface, wherein the cloud device provides the network function through the first network interface, and provides at least one first peripheral device through the first expansion bus interface or the first network interface to the mobile electronic device for use. The first expansion device includes at least one second peripheral device, a second expansion bus interface, a third expansion bus interface and a second network interface. The second expansion bus interface is coupled to the second peripheral device, the third expansion bus interface and the second network interface, and is used for coupling to the mobile electronic device. The third expansion bus interface is used for coupling to the first expansion bus interface and the first network interface, wherein the first expansion device provides the network function to the mobile electronic device for use through the second network interface, and provides the second peripheral device to the mobile electronic device for use through the second expansion bus interface. The mobile electronic device detects the first network interface and the second network interface and instructs the expansion module to provide the network function to the mobile electronic device for use through the first network interface or the second network interface.

A control method of the expansion module is introduced herein, wherein the expansion module includes a cloud device and a first expansion device. The control method includes: detecting a first network interface of the cloud device and a second network interface of the first expansion device; and instructing the expansion module to provide the network function through the first network interface or the second network interface according to the result of detection.

Based on the above, the expansion module and the control method thereof disable the function of specific network interfaces to enable the mobile electronic device to use the network function provided by the network interface of the cloud device when the mobile electronic device detects a plurality of network interfaces simultaneously, and thereby solve the problem of use when a plurality of network interfaces co-exist for the mobile electronic device.

In order to make the features and advantages of the invention more comprehensible, several exemplary embodiments accompanied with figures are described in details below.

### BRIEF DESCRIPTION OF THE DRAWINGS

The accompanying drawings are included to provide further understanding, and are incorporated in and constitute a part of this specification. The drawings illustrate exemplary embodiments and, together with the description, serve to explain the principles of the disclosure.
FIG. 1 is a schematic diagram of an expansion module according to an embodiment of the invention.
FIG. 2 is a schematic diagram of an expansion module according to another embodiment of the invention.
FIG. 3 is a schematic diagram of an expansion module according to another embodiment of the invention.
FIG. 4 is a flowchart of steps of a control method of an expansion module according to an embodiment of the invention.

### DETAILED DESCRIPTION OF DISCLOSED EMBODIMENTS

The embodiments of the invention introduce an expansion module and control method thereof, wherein the problem of a plurality of network interfaces existing simultaneously is solved by means of disabling the function of specific network interfaces or covering specific network interfaces with a mechanical structure. In order to make the invention more comprehensible, embodiments are described below as the examples to demonstrate that the invention can actually be realized. In addition, wherever possible, elements/components/steps with identical reference numerals represent identical or similar parts in the drawings and embodiments.

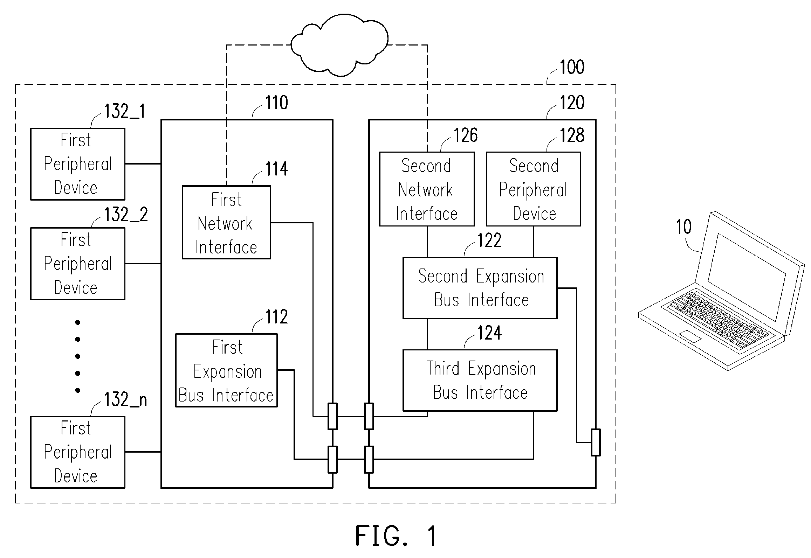

FIG. 1 is a schematic diagram of an expansion module according to an embodiment of the invention. In the embodiment, an expansion module 100 provides an expansion function for a mobile electronic device 10. Therein, the mobile electronic device 10 may be mobile electronic devices such as a notebook computer, an ultrabook computer, a tablet computer, a personal digital assistant (PDA) or a smart phone. The expansion module 100 may be designed in the form of a docking station or others, but the invention is not limited thereto.

Referring to FIG. 1, the expansion module 100 includes a cloud device 110 and a first expansion device 120. The cloud device 110 includes a first expansion bus interface 112 and a first network interface 114, wherein the cloud device 110 provides the network function through the first network interface 114, and provides at least one first peripheral device to the mobile electronic device 10 for use through the first expansion bus interface 112 or the first network interface 114. The at least one first peripheral device herein are first peripheral devices 132_1∼132_n, for example, wherein n is a positive integer.

The first expansion device 120 includes at lease one second peripheral device, a second expansion bus interface 122, a third expansion bus interface 124 and a second network interface 126, and the at least one second peripheral device herein is a second peripheral device 128, for example. In the first expansion device 120, the second expansion bus interface 122 is coupled to the second peripheral device 128, the third expansion bus interface 124 and the second network interface 126, and is used for coupling to the mobile electronic device 10. The third expansion bus interface 124 is used for coupling to the first expansion bus interface 112 and the first network interface 114 of the cloud device 110, wherein the first expansion device 120 provides the network function through the second network interface 126, and provides the second peripheral device 128 to the mobile electronic device 10 for use through the second expansion bus interface 122.

More concretely, the cloud device 110 in the expansion module 100 provides the first peripheral devices 132_1∼132_n to the mobile electronic device 10 for use through the first expansion bus interface 112 or the first network interface 114. Therefore, without carrying the expansion module 100 and the mobile electronic device 10 simultaneously, a user is also capable of making the mobile electronic device 10 control the first peripheral devices 132_1∼132_n through multiple means such as the Internet or Local Area Networks without connecting to the expansion module 100 directly via physical lines. Even if the user is far away from home, he is capable of making the mobile electronic device 10 be coupled to the expansion module 100 at home through the Internet and the cloud device 110.

Besides, when the mobile electronic device 10 is connected with the cloud device 110 directly or through the first expansion device 120, the mobile electronic device 10 may also use the network function directly through the first network interface 114 of the cloud device 110.

On the other hand, the first expansion device 120 in the expansion module 100 provides the second peripheral device 128 having a demand for a higher transmission rate compared with the first peripheral device 132_1∼132_n to the mobile electronic device 10 for use through the second expansion bus interface 122, and the second expansion bus interface 122 further converts passing signals between expansion bus standards supported by the second expansion bus interface 122 and the third expansion bus interface 124 in order to provide the first peripheral devices 132_1∼132_n to the mobile electronic device 10 for use.

In the embodiment, the first expansion bus interface 112 and the third expansion bus interface 124 are expansion bus interfaces supporting an identical expansion bus standard, such as a USB hub, while the second expansion bus interface 122 is an expansion bus interface with a higher transmission rate, such as a Thunderbolt controller. In other words, the transmission rate of the second expansion bus interface 122 is higher than transmission rates of the first expansion bus interface 112 and the third expansion bus interface 124.

The first network interface 114 and the second network interface 126 are Gigabit Ethernet interfaces, for example. Besides, the first peripheral devices 132_1∼132_n are peripheral devices such as a hard disk drive (HDD), an optical disk drive (ODD) or a card reader, and the second peripheral device 128 is a peripheral device having a demand for a higher transmission rate, such as a Graphics Processing Unit (GPU) or a Video card, but the invention is not limited thereto.

In addition, similar to the first network interface 114 of the cloud device 110, the first expansion device 120 also has the second network interface 126 to provide the function of network connection to the mobile electronic device 10.

Although the first network interface 114 and the second network interface 126 enable the cloud device 110 and the first expansion device 120 to provide the network function respectively to the mobile electronic device 10 for use, when the cloud device 110 and the first expansion device 120 are coupled to the mobile electronic device 10 simultaneously, the problem of use between the first network interface 114 and the second network interface 128 needs to be solved.

For instance, when the user only provides a network signal to the second network interface 126, the first expansion device 120 is capable of providing the network function to the mobile electronic device 10 for use. However, since the cloud device 110 is not connected to the network, the mobile electronic device 10 can only use the first peripheral devices 132_1∼132_n through the first expansion bus interface 112 instead of using the function of the first peripheral devices 132_1∼132_n by means of cloud control, such as the Internet.

Providing network signals or network lines simultaneously to the first network interface 114 and the second network interface 126 respectively does not match the condition of use for common users at home.

Therefore, through the structure of the expansion module 100 introduced in the embodiment of the invention, the mobile electronic device 10 detects the first network interface 114 and the second network interface 126 of the expansion module 100, and instructs the expansion module 100 to provide the network function to the mobile electronic device 10 for use through the first network interface 114 or the second network interface 128 according to the result of detection.

To take things a step further, when the mobile electronic device 10 detects one of the first network interface 114 and the second network interface 126, meaning the mobile electronic device 10 is only coupled to one of the cloud device 110 and the first expansion device 120, the mobile electronic device 10 may use the network function provided by the detected one of the first network interface 114 and the second network interface 126. For example, when the mobile electronic device 10 only detects the first network interface 114 but not the second network interface 126, the expansion module 100 provides the network function through the first network interface 114. On the contrary, when the mobile electronic device 10 only detects the second network interface 126 but not the first network interface 114, the expansion module 100 provides the network function through the second network interface 126.

On the other hand, when the mobile electronic device 10 detects the first network interface 114 and the second network interface 126 simultaneously, meaning the mobile electronic device 10 is coupled to the first expansion device 120, and is coupled to the cloud device 110 through the first expansion device 120. At this time, the expansion module 100 chooses the cloud device 110 as the centric device to provide the network function to the mobile electronic device 10 for use exclusively through the first network interface 114 of the cloud device 110. Therein, providing the network function exclusively through the first network interface 114 is realized with a mechanism or program control of the mobile electronic device 10 (further explanation on this point is provided in detail in the following paragraphs.)

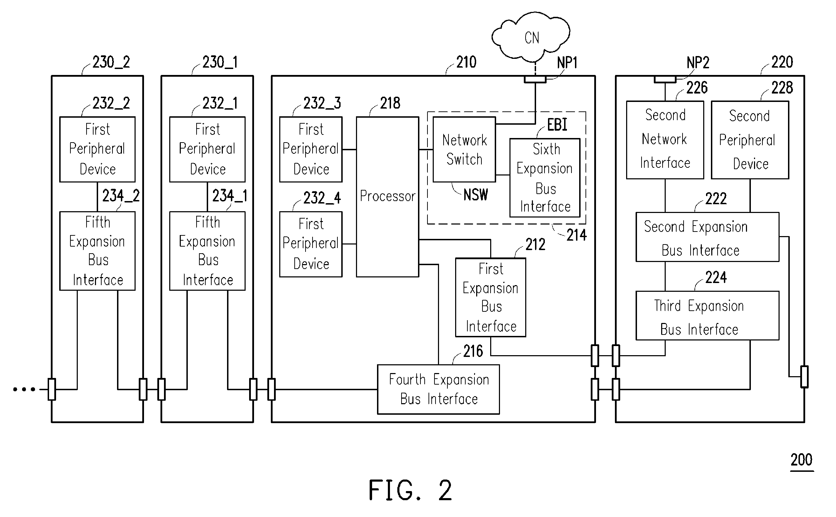

To further describe the embodiment of the invention, FIG. 2 is a schematic diagram of the expansion module according to another embodiment of the invention. Referring to FIG. 2, an expansion module 200 includes a cloud device 210, a first expansion device 220 and at least one second expansion device, the at least one second expansion device herein being second expansion devices 230_1 and 230_2, for example.

In the embodiment, in comparison with the embodiment of FIG. 1, first peripheral devices provided by the cloud device 210 may be first peripheral devices 232_1 and 232_2 included respectively in the second expansion devices 230_1 and 230_2, wherein each of the second expansion devices 230_1 and 230_2 are coupled to the cloud device 210 to provide an expansion function by means of a daisy chain, but the invention is not limited thereto.

More concretely, the second expansion device 230_1 includes the first peripheral device 232_1 and a fifth expansion bus interface 234_1, while the second expansion device 230_2 includes the first peripheral device 232_2 and a fifth expansion bus interface 234_2. The fifth expansion bus interfaces 234_1 and 234_2 and the fourth expansion bus interface 216 of the cloud device 210 are coupled as a daisy chain. The fifth expansion bus interfaces 234_1 and 234_2 are coupled respectively to the first peripheral devices 232_1 and 232_2 of the corresponding second expansion devices 230_1 and 230_2.

In the embodiment, the fifth expansion bus interface 234_1 and 234_2, a first expansion bus interface 212 and the fourth expansion bus interface 216 of the cloud device 210, and a third expansion bus interface 224 of the first expansion device 220 all support the same expansion bus standard. For example, the interfaces may all be USB hubs. Therefore, signals between the cloud device 210 and the second expansion devices 230_1 and 230_2 are transmitted directly without conversion. However, in other embodiments, the first expansion bus interface 212, the fourth expansion bus interface 216 and the fifth expansion bus interfaces 234_1 and 234_2 may support a different expansion bus standard according to the needs of the designer, and the invention is not limited thereto.

The cloud device 210 includes a first network interface 214, the first expansion bus interface 212, the fourth expansion bus interface 216, a processor 218 and first peripheral devices 232_3 and 232_4, wherein the processor 218 is coupled to the first network interface 214, the first expansion bus interface 212, the fourth expansion bus interface 216, and the first peripheral devices 232_3 and 232_4.

Besides, in addition to the expansion module 200 providing the expansion function of the first peripheral devices 232_1 and 232_2 for the mobile electronic device 10 with a serial connection of the first expansion devices 230_1 and 230_2, the cloud device 210 itself may also include a first peripheral device to provide the expansion function to the mobile electronic device 10 for use. For example, the cloud device 210 herein further includes the first peripheral devices 232_3 and 232_4, wherein the first peripheral devices 232_3 and 232_4 are coupled to and controlled by the processor 218.

In other words, both a second expansion device and a cloud device themselves may include a portion or the whole of a first peripheral device provided by the cloud device, and the invention is not limited thereto.

In the cloud device 210, the first expansion bus interface 212 serves as a client/host bridge, because the processor 218 signals and communicates with the first peripheral devices 232_1∼232_4 in an identity of a host device, while the processor 218 provides the first peripheral devices 232_1∼232_4 to the mobile electronic device 10 for use through the first expansion bus interface 212 in an identity of a client device. The first expansion bus interface 212 serves as the bridge of the two identities of the processor 218.

The first network interface 214 includes a sixth expansion bus interface EBI and a network switch NSW. The sixth expansion bus interface EBI is coupled to the third expansion bus interface 224 of the first expansion device 220, converting passing signals between an expansion bus standard supported by the third expansion bus interface 224 and a network standard supported by the first network interface 214.

The network switch NSW is coupled between the processor 218 and the sixth expansion bus interface EBI, wherein the network switch NSW includes a network connection port NP1 for the cloud device 210 to be coupled to the cloud network CN through the network connection port NP1, and thereby provides the first peripheral devices 232_1∼232_4 to the mobile electronic device 10 for use. For example, the cloud network CN may be the Internet or a local area network. The network switch NSW may be a network switch or a network hub supporting Gigabit Ethernet, the sixth expansion bus interface EBI may be a conversion interface between USB and Gigabit Ethernet, and the invention is not limited thereto.

Furthermore, when the cloud device 210 is coupled to the mobile electronic device 10 through the network connection port NP1 and the cloud network CN, the processor 218 provides the first peripheral devices 232_1∼232_4 to the mobile electronic device 10 for use through the network switch NSW. On the other hand, when the cloud device 210 is coupled to the mobile electronic device 10 through the first expansion bus interface 212, the processor 218 communicates with the mobile electronic device 10 in the identity of a client device through the first expansion bus interface 212, and provides the first peripheral devices 232_1∼232_4 to the mobile electronic device 10 for use.

In the embodiment, the first expansion device 220 is roughly identical with the first expansion device 120 above, and therefore the first expansion device 220 is not elaborated herein.

More specifically, to solve the problem of a plurality of network interfaces co-existing, the expansion module 200 in the embodiment prohibits the use of a second network interface 226 by means of a mechanical structure or program control of the mobile electronic device.

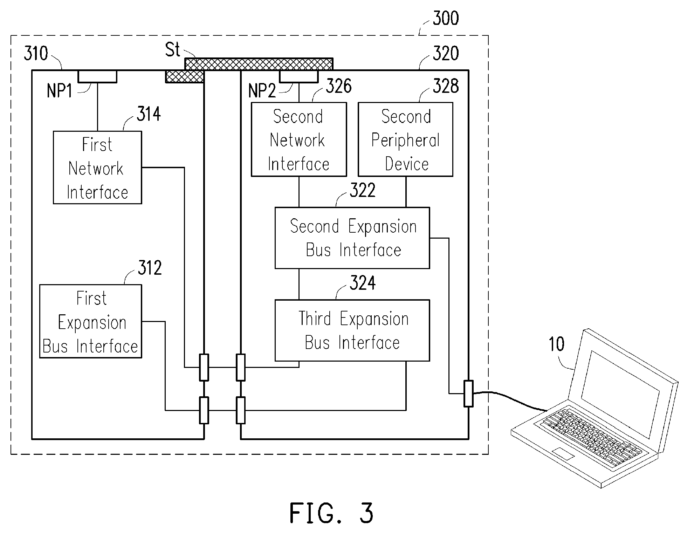

For instance, if the prohibition of the use of the second network interface 226 is realized by means of a mechanical structure, the means of covering a network connection port NP2 of the second network interface 226 may be utilized to prevent a user from inserting a network line into the network connection port NP2 of the second network interface 226, as shown in FIG. 3, wherein FIG. 3 is a schematic diagram of an expansion module of another embodiment of the invention.

Referring to FIG. 3, in the embodiment, the expansion module 300 includes a cloud device 310 and a first expansion device 320. The cloud device 310 further includes a cover St. Therein, the cover St is used for covering a network connection port NP2 of a second network interface 326 when the cloud device 310 and the first expansion device 320 are coupled to each other. Thus, in the circumstance that the cloud device 310 or the first expansion device 320 is singularly coupled to the mobile electronic device 10, the user can use the network function by plugging the network line into corresponding network connection ports NP1 or NP2 respectively. In the circumstance that the cloud device 310 and the first expansion device 320 are coupled to the mobile electronic device 10 simultaneously, the user can only use the network function by inserting the network line into the network connection port NP1 due to the covering mechanical structure.

The cover St may be formed as an integral whole with the could device 310 or be a plug-in to the cloud device 310, and the structure of the cloud device 310 and the first expansion device 320 may be identical with the devices in the embodiments of FIG. 1 or 2, but the invention is not limited thereto.

Besides prohibiting the use of the second network interface 226 by means of a mechanical structure, the expansion module 200 also detects for the existence of the first network interface 214 and the second network interface 226 with the mobile electronic device 10, and detects whether the first network interface 214 or the second network interface 226 receive a network signal, in order to decide whether to use the first network interface 214 or the second network interface 226 to provide the network function.

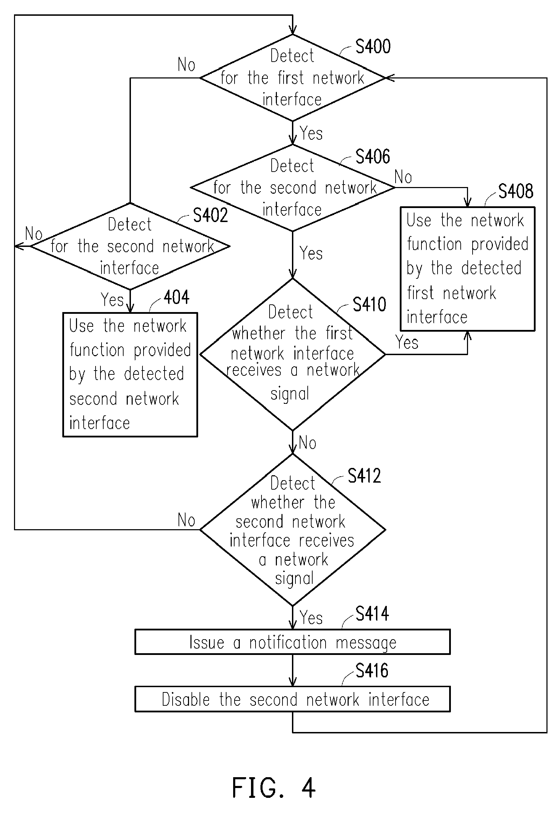

Referring both to FIGs. 2 and 4, FIG. 4 is a flowchart of the steps in a control method of an expansion module of an embodiment of the invention, and the control method is executed by a program of the mobile electronic device 10. In the embodiment, the mobile electronic device detects for the existence of the first network interface 214 of the cloud device 210 and the second network interface 226 of the first expansion device 220, and instructs the expansion module 200 to provide the network function to the mobile electronic device for use through the first network interface 214 or the second network interface 226 according to the result of detection.

More specifically, the mobile electronic device first detects for the first network interface 214 (step S400) to determine whether the first network interface 214 exists. In the circumstance that the first network interface 214 is not detected, the mobile electronic device further detects for the second network interface 226 (step S402) to determine whether the second network interface 226 exists. If the mobile electronic device does not detect the second network interface 226 at the moment, i.e. the mobile electronic device is not coupled to the cloud device 210 or the first expansion device 220 at the moment, the operation returns to step S400 to repeat the detection whether a device having a network interface is coupled to the mobile electronic device.

In the circumstance that the mobile electronic device detects the existence of the second network interface 226 in step S402, i.e. the mobile electronic device is only coupled to the first expansion device 220 at the moment, the mobile electronic device uses the network function provided by the detected second network interface 226 (step S404).

On the other hand, in the circumstance that the first network interface 214 is detected in step S400, the mobile electronic device also detects further for the second network interface 226 (step S406) to determine whether the second network interface 226 exists. If the mobile electronic device does not detect the existence of the second network interface 226 at the moment, i.e. the mobile electronic device is only coupled to the cloud device 210 at the moment, the mobile electronic device uses the network function provided by the detected first network interface 214 (step S408). In other words, when the mobile electronic device detects one of the first network interface 214 and the second network interface 226, the mobile electronic devices uses the detected network function provided by the first network interface 214 or the second network interface 226.

In the circumstance that the mobile electronic device also detects the existence of the second network interface 226 in step S406, i.e. the mobile electronic device is coupled to the cloud device 210 and the first expansion device 220 simultaneously at the moment, the mobile electronic device further detects whether the first network interface 214 and the second network interface 226 receive a network signal, that is, the mobile electronic device detects whether the first network interface 214 and the second network interface 226 are connected to a network line. More specifically, the mobile electronic device first detects whether the first network interface 214 receives a network signal (step S410). If it is detected that the first network interface 214 receives a network signal, the mobile electronic device uses the network function provided by the first network interface 214 (step S408). If the mobile electronic device detects that the first network interface 214 does not receive a network signal, the mobile electronic device further detects whether the second network interface 226 receives a network signal (step S412). When it is detected that the second network interface 226 does not receive a network signal, this means that neither the first nor the second network interfaces 214 and 226 receives a network signal, that is, neither network interfaces are connected with the network line. Therefore, the operation returns to step S400 to detect the coupling configuration of the first network interface 214 and the second network interface 226 with the mobile electronic device.

On the other hand, in the circumstance that the mobile electronic device detects that the first network interface 214 does not receive a network signal, but the second network interface 226 receives a network signal, that is, only the second network interface 226 is connected with the network line, the mobile electronic device issues a notification message (step S414) to ask the user to use the network function by providing a network signal to the first network interface 214 (i.e. moving the network line to plug into the network connection port NP1 of the first network interface 214) and disabling the function of the second network interface 226 (step S416). Therein, the alert message sent by the mobile electronic device is displayed on the display of the mobile electronic device itself, or on any display assembled onto the expansion module or the mobile electronic device, but the invention is not limited thereto. After the step of disabling the function of the second network interface 226, the operation returns to step S400.

It is worth noting that the operation sequence of step S400 to step S406 and step S410 to step S412 is only an example of the embodiment, the sequence of S400 and step S406 may be exchanged or performed simultaneously in other embodiments, and the sequence of step S410 to step S412 may also be exchanged or performed simultaneously. The invention is not limited thereto.

Besides, since transmission rates of the second expansion bus interface 222 and the third expansion bus interface 224 are higher than transmission rates of the first network interface 214 and the second network interface 226, the transmission of network signals between the network interfaces and the expansion bus interfaces does not give rise to the phenomenon of a bottleneck.

In light of the above, the expansion module and the control method thereof in the embodiments of the invention disable the function of specific network interfaces to enable the mobile electronic device to use the network function provided by the network interface of the cloud device when the mobile electronic device detects a plurality of network interfaces simultaneously, and thereby solve the problem of use when a plurality of network interfaces co-exist for the mobile electronic device. In addition, the expansion module may also disable the use of specific network interfaces by means of covering specific network interfaces with a mechanism.

## Claims

1. An expansion module (100, 200, 300) for providing expansion functions for a mobile electronic device (10), comprising:
a cloud device (110, 210, 310) comprising a first expansion bus interface (112, 212, 312) and a first network interface (114, 214, 314), wherein the cloud device (110, 210, 310) provides network function through the first network interface (114, 214, 314), and provides at least one first peripheral device (132_1, 132_2, 132_n, 232_1, 232_2, 232_3, 232_4) to the mobile electronic device (10) for use through the first expansion bus interface (112, 212, 312) or the first network interface (114, 214, 314); and
a first expansion device (120, 220, 320), comprising at least one second peripheral device (128, 228, 328), a second expansion bus interface (122, 222, 322), a third expansion bus interface (124, 224, 324) and a second network interface (126, 226, 326), the second expansion bus interface (122, 222, 322) being coupled to the second peripheral device (128, 228, 328), the third expansion bus interface (124, 224, 324) and the second network interface (126, 226, 326), and being used for coupling to the mobile electronic device (10), the third expansion bus interface (124, 224, 324) being used for coupling to the first expansion bus interface (112, 212, 312) and the first network interface (114, 214, 314) of the cloud device (110, 210, 310), wherein the first expansion device (120, 220, 320) provides the network function through the second network interface (126, 226, 326), and provides the second peripheral device (128, 228, 328) to the mobile electronic device (10) for use through the second expansion bus interface (122, 222, 322); the mobile electronic device (10) detects the first network interface (114, 214, 314) and the second network interface (126, 226, 326) and instructs the expansion module (100, 200, 300) to provide the network function to the mobile electronic device (10) for use through the first network interface (114, 214, 314) or the second network interface (126, 226, 326)
wherein the mobile electronic device (10) uses the network function provided by the first network interface (114, 214, 314) of the cloud device (110, 210, 310) when the first network interface (114, 214, 314) and the second network interface (126, 226, 326) are simultaneously detected by the mobile electronic device.

2. The expansion module (100, 200, 300) according to claim 1, wherein the mobile electronic device (10) uses the network function provided by the detected one of the first network interface (114, 214, 314) and the second network interface (126, 226, 326) when one of the first network interface (114, 214, 314) and the second network interface (126, 226, 326) is detected by the mobile electronic device; the mobile electronic device (10) repeatedly detects the first network interface (114, 214, 314) of the cloud device (110, 210, 310) and the second network interface (126, 226, 326) when the first network interface (114, 214, 314) and the second network interface (126, 226, 326) are not detected.

3. The expansion module (100, 200, 300) according to claim 2, wherein the mobile electronic device (10) further detects whether the first network interface (114, 214, 314) and the second network interface (126, 226, 326) receive a network signal when the mobile electronic device (10) detects the first network interface (114, 214, 314) and the second network interface (126, 226, 326) simultaneously, wherein the mobile electronic device (10) issues a notification message and disables the second network interface (126, 226, 326) when the mobile electronic device (10) detects that the first network interface (114, 214, 314) does not receive the network signal and the second network interface (126, 226, 326) receives the network signal.

4. The expansion module (100, 200, 300) according to claim 2, wherein the cloud device (110, 210, 310) further comprises a cover (St), the cover (St) being used for covering a network connection port (NP2) of the second network interface (126, 226, 326) when the cloud device (110, 210, 310) and the first expansion device (120, 220, 320) are coupled to each other.

5. The expansion module (100, 200, 300) according to claim 1, wherein the cloud device (110, 210, 310) further comprises a fourth expansion bus interface (216), and the expansion module (100, 200, 300) further comprises:
at least one second expansion device (230_1, 230_2), each of the at least one second expansion device (230_1, 230_2) comprising a fifth expansion bus interface (234_1, 234_2), and the at least one second expansion device (230_1, 230_2) comprising a portion or all of the at least one first peripheral device (132_1, 132_2, 132_n, 232_1, 232_2, 232_3, 232_4), wherein the fourth expansion bus interface (216) and each of the fifth expansion bus interface (234_1, 234_2) are coupled as a daisy chain, and each of the fifth expansion bus interface (234_1, 234_2) is coupled to the first peripheral device (132_1, 132_2, 132_n, 232_1, 232_2, 232_3, 232_4) of the corresponding second expansion device (230_1, 230_2), wherein the first expansion bus interface (112, 212, 312), the third expansion bus interface (124, 224, 324), the fourth expansion bus interface (216) and the fifth expansion bus interface (234_1, 234_2) support an identical expansion bus standard.

6. The expansion module (100, 200, 300) according to claim 1, wherein the second expansion bus interface (122, 222, 322) converts passing signals between expansion bus standards supported by the second expansion bus interface (122, 222, 322) and the third expansion bus interface (124, 224, 324) in order to provide the first peripheral device (132_1, 132_2, 132_n, 232_1, 232_2, 232_3, 232_4) to the mobile electronic device (10) for use, wherein a transmission rate of the second expansion bus interface (122, 222, 322) is higher than transmission rates of the first expansion bus interface (112, 212, 312) and the third expansion bus interface (124, 224, 324).

7. The expansion module (100, 200, 300) according to claim 6, wherein the transmission rate of the third expansion bus interface (124, 224, 324) is higher than transmission rates of the first network interface (114, 214, 314) and the second network interface (126, 226, 326).

8. The expansion module (100, 200, 300) according to claim 1, wherein the first network interface (114, 214, 314) comprises:
a sixth expansion bus interface (EBI) coupled to the third expansion bus interface (124, 224, 324) of the first expansion device (120, 220, 320), converting passing signals between an expansion bus standard supported by the third expansion bus interface (124, 224, 324) and a network standard supported by the first network interface (114, 214, 314); and
a network hub or a network switch (NSW), coupled to the sixth expansion bus interface (EBI), comprising a network connection port (NP1) for the cloud device (110, 210, 310) to be coupled to the mobile electronic device (10) through the network connection port (NP1) and a cloud network (CN); the cloud device (110, 210, 310) further comprising:
a processor (218), coupled to the network hub or the network switch (NSW), and coupled to the first expansion bus interface (112, 212, 312); the processor (218) providing the first peripheral device (132_1, 132_2, 132_n, 232_1, 232_2, 232_3, 232_4) to the mobile electronic device (10) for use through the network hub or the network switch (NSW) when the cloud device (110, 210, 310) is coupled to the mobile electronic device (10) through the network connection port (NP1) and the cloud network (CN); the processor (218) providing the first peripheral device (132_1, 132_2, 132_n, 232_1, 232_2, 232_3, 232_4) to the mobile electronic device (10) for use through the first expansion bus interface (112, 212, 312) when the cloud device (110, 210, 310) is coupled to the mobile electronic device (10) through the first expansion bus interface (112, 212, 312).

9. The expansion module (100, 200, 300) according to claim 8, wherein the cloud device (110, 210, 310) further comprises the at least one first peripheral device (132_1, 132_2, 132_n, 232_1, 232_2, 232_3, 232_4), the at least one first peripheral device (132_1, 132_2, 132_n, 232_1, 232_2, 232_3, 232_4) being coupled to the processor (218).

10. A control method of an expansion module (100, 200, 300) according to one of the claims 1-9, the control method comprising:
detecting a first network interface (114, 214, 314) of the cloud device (110, 210, 310) and a second network interface (126, 226, 326) of the first expansion device (120, 220, 320); and
instructing the expansion module (100, 200, 300) to provide network function through the first network interface (114, 214, 314) or the second network interface (126, 226, 326) according to a result of the detection, wherein the result of the detection comprises both of the first network interface (114, 214, 314) and the second network interface (126, 226, 326) are detected, one of the first network interface (114, 214, 314) and the second network interface (126, 226, 326) is detected, and both of the first network interface (114, 214, 314) and the second network interface (126, 226, 326) are not detected; and
wherein the steps of instructing the expansion module (100, 200, 300) to provide the network function through the first network interface (114, 214, 314) or the second network interface (126, 226, 326) according to the result of the detection comprises:
using the network function provided by the first network interface (114, 214, 314) of the cloud device (110, 210, 310) when the first network interface (114, 214, 314) and the second network interface (126, 226, 326) are simultaneously detected.

11. The control method of the expansion module (100, 200, 300) according to claim 10, wherein the steps of instructing the expansion module (100, 200, 300) to provide the network function through the first network interface (114, 214, 314) or the second network interface (126, 226, 326) according to the result of the detection further comprises:
using the network function provided by the detected one of the first network interface (114, 214, 314) and the second network interface (126, 226, 326) when one of the first network interface (114, 214, 314) and the second network interface (126, 226, 326) is detected; and
repeatedly performing the step of detecting the first network interface (114, 214, 314) of the cloud device (110, 210, 310) and the second network interface (126, 226, 326) of the first expansion device (120, 220, 320) when both of the first network interface (114, 214, 314) and the second network interface (126, 226, 326) are not detected.

12. The control method of the expansion module (100, 200, 300) according to claim 11, wherein the steps of using the network function provided by the first network interface (114, 214, 314) when the first network interface (114, 214, 314) and the second network interface (126, 226, 326) are detected simultaneously comprises:
detecting whether the first network interface (114, 214, 314) and the second network interface (126, 226, 326) receive a network signal;
using the network function provided by the first network interface (114, 214, 314) when detecting that the first network interface (114, 214, 314) receives the network signal; and
issuing a notification message and disabling the second network interface (126, 226, 326) when detecting that the first network interface (114, 214, 314) does not receive the network signal and the second network interface (126, 226, 326) receives the network signal.

## Patentansprüche

1. Erweiterungsmodul (100, 200, 300) zum Bereitstellen von Erweiterungsfunktionen für eine tragbare elektronische Vorrichtung (10), umfassend:
eine Cloud-Vorrichtung (110, 210, 310), die eine erste Erweiterungs-Bus-Schnittstelle (112, 212, 312) und eine erste Netzwerkschnittstelle (114, 214, 314) umfasst, wobei die Cloud-Vorrichtung (110, 210, 310) durch die erste Netzwerkschnittstelle (114, 214, 314) eine Netzwerkfunktion bereitstellt und der tragbaren elektronischen Vorrichtung (10) wenigstens eine erste Peripherievorrichtung (132_1, 132_2, 132_n, 232_1, 232_2, 232_3, 232_4) bereitstellt zur Verwendung durch die erste Erweiterungs-Bus-Schnittstelle (112, 212, 312) oder die erste Netzwerkschnittstelle (114, 214, 314); und
eine erste Erweiterungsvorrichtung (120, 220, 320), die wenigstens eine zweite Peripherievorrichtung (128, 228, 328), eine zweite Erweiterungs-Bus-Schnittstelle (122, 222, 322), eine dritte Erweiterungs-Bus-Schnittstelle (124, 224, 324) und eine zweite Netzwerkschnittstelle (126, 226, 326) umfasst, wobei die zweite Erweiterungs-Bus-Schnittstelle (122, 222, 322) mit der zweiten Peripherievorrichtung (128, 228, 328), der dritten Erweiterungs-Bus-Schnittstelle (124, 224, 324) und der zweiten Netzwerkschnittstelle (126, 226, 326) gekoppelt ist und zum Koppeln der tragbaren Vorrichtung (10) verwendet wird, wobei die dritte Erweiterungs-Bus-Schnittstelle (124, 224, 324) zum Koppeln der ersten Erweiterungs-Bus-Schnittstelle (112, 212, 312) und der ersten Netzwerkschnittstelle (114, 214, 314) der Cloud-Vorrichtung (110, 210, 310) verwendet wird, wobei die erste Erweiterungsvorrichtung (120, 220, 320) die Netzwerkfunktion durch die zweite Netzwerkschnittstelle (126, 226, 326) bereitstellt und der tragbaren elektronischen Vorrichtung (10) die zweite Peripherievorrichtung (128, 228, 328) zur Verwendung durch die zweite Erweiterungs-Bus-Schnittstelle (122, 222, 322) bereitstellt;
wobei die tragbare elektronische Vorrichtung (10) die erste Netzwerkschnittstelle (114, 214, 314) und die zweite Netzwerkschnittstelle (126, 226, 326) erfasst und das Erweiterungsmodul (100, 200, 300) anweist der tragbaren elektronischen Vorrichtung (10) die Netzwerkfunktion bereitzustellen zur Verwendung durch die erste Netzwerkschnittstelle (114, 214, 314) oder die zweite Netzwerkschnittstelle (126, 226, 326),
wobei die tragbare elektronische Vorrichtung (10) die Netzwerkfunktion, die durch die erste Netzwerkschnittstelle (114, 214, 314) der Cloud-Vorrichtung (110, 210, 310) bereitgestellt wird, verwendet, wenn die erste Netzwerkschnittstelle (114, 214, 314) und die zweite Netzwerkschnittstelle (126, 226, 326) gleichzeitig durch die tragbare elektronische Vorrichtung erfasst werden.

2. Erweiterungsmodul (100, 200, 300) gemäß Anspruch 1, wobei die tragbare elektronische Vorrichtung (10) die Netzwerkfunktion, die durch die erfasste Netzwerkschnittstelle der ersten Netzwerkschnittstelle (114, 214, 314) und der zweiten Netzwerkschnittstelle (126, 226, 326) bereitgestellt wird, verwendet, wenn eine Netzwerkschnittstelle der ersten Netzwerkschnittstelle (114, 214, 314) und der zweiten Netzwerkschnittstelle (126, 226, 326) durch die tragbare elektronische Vorrichtung erfasst wird; wobei die tragbare elektronische Vorrichtung (10) wiederholt die erste Netzwerkschnittstelle (114, 214, 314) der Cloud-Vorrichtung (110, 210, 310) und die zweite Netzwerkschnittstelle (126, 226, 326) erfasst, wenn die erste Netzwerkschnittstelle (114, 214, 314) und die zweite Netzwerkschnittstelle (126, 226, 326) nicht erfasst werden.

3. Erweiterungsmodul (100, 200, 300) gemäß Anspruch 2, wobei die tragbare elektronische Vorrichtung (10) weiterhin erfasst, ob die erste Netzwerkschnittstelle (114, 214, 314) und die zweite Netzwerkschnittstelle (126, 226, 326) ein Netzwerksignal erfassen, wenn die tragbare elektronische Vorrichtung (10) die erste Netzwerkschnittstelle (114, 214, 314) und die zweite Netzwerkschnittstelle (126, 226, 326) gleichzeitig erfasst, wobei die tragbare elektronische Vorrichtung (10) eine Benachrichtigungsnachricht ausgibt und die zweite Netzwerkschnittstelle (126, 226, 326) deaktiviert, wenn die tragbare elektronische Vorrichtung (10) erfasst, dass die erste Netzwerkschnittstelle (114, 214, 314) das Netzwerksignal nicht empfängt und die zweite Netzwerkschnittstelle (126, 226, 326) das Netzwerksignal empfängt.

4. Erweiterungsmodul (100, 200, 300) gemäß Anspruch 2, wobei die Cloud-Vorrichtung (110, 210, 310) weiterhin eine Abdeckung (St) umfasst, wobei die Abdeckung (St) verwendet wird, um einen Netzwerkverbindungsanschluss (NP2) der zweiten Netzwerkschnittstelle (126, 226, 326) abzudecken, wenn die Cloud-Vorrichtung (110, 210, 310) und die erste Erweiterungsvorrichtung (120, 220, 320) miteinander gekoppelt sind.

5. Erweiterungsmodul (100, 200, 300) gemäß Anspruch 1, wobei die Cloud-Vorrichtung (110, 210, 310) weiterhin eine vierte Erweiterungs-Bus-Schnittstelle (216) umfasst und das Erweiterungsmodul (100, 200, 300) weiterhin umfasst:
wenigstens eine zweite Erweiterungsvorrichtung (230_1, 230_2), wobei jede der wenigstens einen zweiten Erweiterungsvorrichtung (230_1, 230_2) eine fünfte Erweiterungs-Bus-Schnittstelle (234_1, 234_2) umfasst und wobei die wenigstens eine zweite Erweiterungsvorrichtung (230_1, 230_2) einen Abschnitt oder alles der ersten Peripherievorrichtung (132_1, 132_2, 132_n, 232_1, 232_2, 232_3, 232_4) umfasst, wobei die vierte Erweiterungs-Bus-Schnittstelle (216) und jede der fünften Erweiterungs-Bus-Schnittstellen (234_1, 234_2) als eine Daisy-Chain gekoppelt sind, und wobei jede der fünften Erweiterungs-Bus-Schnittstellen (234_1, 234_2) mit der ersten Peripherievorrichtung (132_1, 132_2, 132_n, 232_1, 232_2, 232_3, 232_4) der entsprechenden zweiten Erweiterungsvorrichtung (230_1, 230_2) gekoppelt ist, wobei die erste Erweiterungs-Bus-Schnittstelle (112, 212, 312), die dritte Erweiterungs-Bus-Schnittstelle (124, 224, 324), die vierte Erweiterungs-Bus-Schnittstelle (216) und die fünfte Erweiterungs-Bus-Schnittstelle (234_1, 234_2) einen identischen Erweiterung-Bus-Standard unterstützen.

6. Erweiterungsmodul (100, 200, 300) gemäß Anspruch 1, wobei die zweite Erweiterungs-Bus-Schnittstelle (122, 222, 322) passierende Signale zwischen Erweiterungs-Bus-Standards, die durch die zweite Erweiterungs-Bus-Schnittstelle (122, 222, 322) und die dritte Erweiterungs-Bus-Schnittstelle (124, 224, 324) unterstützt werden, umwandelt, um die erste Peripherievorrichtung (132_1, 132_2, 132_n, 232_1, 232_2, 232_3, 232_4) der tragbaren elektronischen Vorrichtung (10) zur Verwendung bereitzustellen, wobei eine Übertragungsrate der zweiten Erweiterungs-Bus-Schnittstelle (122, 222, 322) höher ist als Übertragungsraten der ersten Erweiterungs-Bus-Schnittstelle (112, 212, 312) und der dritten Erweiterungs-Bus-Schnittstelle (124, 224, 324).

7. Erweiterungsmodul (100, 200, 300) gemäß Anspruch 6, wobei die Übertragungsrate der dritten Erweiterungs-Bus-Schnittstelle (124, 224, 324) höher ist als Übertragungsraten der ersten Netzwerkschnittstelle (114, 214, 314) und der zweiten Netzwerkschnittstelle (126, 226, 326).

8. Erweiterungsmodul (100, 200, 300) gemäß Anspruch 1, wobei die erste Netzwerkschnittstelle (114, 214, 314) umfasst:
Eine sechste Erweiterungs-Bus-Schnittstelle (EBI), die mit der dritten Erweiterungs-Bus-Schnittstelle (124, 224, 324) der ersten Erweiterungsvorrichtung (120, 220, 320) gekoppelt ist, und die passierende Signale zwischen einem Erweiterungs-Bus-Standard, der durch die dritte Erweiterungs-Bus-Schnittstelle (124, 224, 324) unterstützt wird, und einem Netzwerkstandard, der durch die erste Netzwerkschnittstelle (114, 214, 314) unterstützt wird, umwandelt; und
einen Netzwerkknoten oder einen Netzwerkschalter (NSW), der mit der sechsten Erweiterungs-Bus-Schnittstelle (EBI) gekoppelt ist, umfassend einen Netzwerkverbindungsanschluss (NP1) für die Cloud-Vorrichtung (110, 210, 310), die mit der tragbaren elektronischen Vorrichtung (10) durch den Netzwerkverbindungsanschluss (NP1) und ein Cloud-Netzwerk (CN) gekoppelt werden soll; wobei die Cloud-Vorrichtung (110, 210, 310) weiterhin umfasst:
einen Prozessor (218), der mit dem Netzwerkknoten oder Netzwerkschalter (NSW) gekoppelt ist und der mit der ersten Erweiterungs-Bus-Schnittstelle (112, 212, 312) gekoppelt ist; wobei der Prozessor (218) durch den Netzwerkknoten oder Netzwerkschalter (NSW) die erste Peripherievorrichtung (132_1, 132_2, 132_n, 232_1, 232_2, 232_3, 232_4) der tragbaren elektronischen Vorrichtung (10) zur Verwendung bereitstellt, wenn die Cloud-Vorrichtung (110, 210, 310) mit der tragbaren elektronischen Vorrichtung (10) durch den Netzwerkverbindungsanschluss (NP1) und das Cloud-Netzwerk (CN) gekoppelt ist; wobei der Prozessor (218) durch die erste Erweiterungs-Bus-Schnittstelle (112, 212, 312) die erste Peripherievorrichtung (132_1, 132_2, 132_n, 232_1, 232_2, 232_3, 232_4) der tragbaren elektronischen Vorrichtung (10) zur Verwendung bereitstellt, wenn die Cloud-Vorrichtung (110, 210, 310) mit der tragbaren elektronischen Vorrichtung (10) durch die erste Erweiterungs-Bus-Schnittstelle (112, 212, 312) gekoppelt ist.

9. Erweiterungsmodul (100, 200, 300) gemäß Anspruch 8, wobei die Cloud-Vorrichtung (110, 210, 310) weiterhin die wenigstens eine erste Peripherievorrichtung (132_1, 132_2, 132_n, 232_1, 232_2, 232_3, 232_4) umfasst, wobei die wenigstens eine erste Peripherievorrichtung (132_1, 132_2, 132_n, 232_1, 232_2, 232_3, 232_4) mit dem Prozessor (218) gekoppelt ist.

10. Steuerungsverfahren eines Erweiterungsmoduls (100, 200, 300) gemäß einem der Ansprüche 1 bis 9, wobei das Steuerungsverfahren umfasst:
Erfassen einer ersten Netzwerkschnittstelle (114, 214, 314) der Cloud-Vorrichtung (110, 210, 310) und einer zweiten Netzwerkschnittstelle (126, 226, 326) der ersten Erweiterungsvorrichtung (120, 220, 320); und
Anweisen des Erweiterungsmoduls (100, 200, 300), um eine Netzwerkfunktion durch die erste Netzwerkschnittstelle (114, 214, 314) oder die zweite Netzwerkschnittstelle (126, 226, 326) gemäß einem Resultat der Erfassung bereitzustellen, wobei das Resultat der Erfassung umfasst, dass sowohl die erste Netzwerkschnittstelle (114, 214, 314) als auch die zweite Netzwerkschnittstelle (126, 226, 326) erfasst wird, dass eine der ersten Netzwerkschnittstelle (114, 214, 314) und der zweiten Netzwerkschnittstelle (126, 226, 326) erfasst wird, und dass sowohl die erste Netzwerkschnittstelle (114, 214, 314) als auch die zweite Netzwerkschnittstelle (126, 226, 326) nicht erfasst werden; und
wobei der Schritt des Anweisens des Erweiterungsmoduls (100, 200, 300), um die Netzwerkfunktion durch die erste Netzwerkschnittstelle (114, 214, 314) oder die zweite Netzwerkschnittstelle (126, 226, 326) gemäß dem Resultat der Erfassung bereitzustellen, umfasst:
Verwenden der Netzwerkfunktion, die durch die erste Netzwerkschnittstelle (114, 214, 314) der Cloud-Vorrichtung (110, 210, 310) bereitgestellt wird, wenn die erste Netzwerkschnittstelle (114, 214, 314) und die zweite Netzwerkschnittstelle (126, 226, 326) gleichzeitig erfasst werden.

11. Steuerungsverfahren des Erweiterungsmoduls (100, 200, 300) gemäß Anspruch 10, wobei die Schritte des Anweisens des Erweiterungsmoduls (100, 200, 300), um die Netzwerkfunktion durch die erste Netzwerkschnittstelle (114, 214, 314) oder die zweite Netzwerkschnittstelle (126, 226, 326) gemäß dem Resultat der Erfassung bereitzustellen, umfasst:
Verwenden der Netzwerkfunktion, die durch die erfasste Netzwerkschnittstelle der ersten Netzwerkschnittstelle (114, 214, 314) und der zweiten Netzwerkschnittstelle (126, 226, 326) bereitgestellt wird, wenn eine Netzwerkschnittstelle der ersten Netzwerkschnittstelle (114, 214, 314) und der zweiten Netzwerkschnittstelle (126, 226, 326) erfasst wurde; und
wiederholtes Durchführen des Schritts des Erfassens der ersten Netzwerkschnittstelle (114, 214, 314) der Cloud-Vorrichtung (110, 210, 310) und der zweiten Netzwerkschnittstelle (126, 226, 326) der ersten Erweiterungsvorrichtung (120, 220, 320), wenn sowohl die erste Netzwerkschnittstelle (114, 214, 314) als auch die zweite Netzwerkschnittstelle (126, 226, 326) nicht erfasst wurden.

12. Steuerungsverfahren des Erweiterungsmoduls (100, 200, 300) gemäß Anspruch 11, wobei die Schritte des Verwendens der Netzwerkfunktion, die durch die erste Netzwerkschnittstelle (114, 214, 314) bereitgestellt wird, wenn die erste Netzwerkschnittstelle (114, 214, 314) und die zweite Netzwerkschnittstelle (126, 226, 326) gleichzeitig erfasst wurden, umfasst:
Erfassen, ob die erste Netzwerkschnittstelle (114, 214, 314) und die zweite Netzwerkschnittstelle (126, 226, 326) ein Netzwerksignal empfangen;
Verwenden der Netzwerkfunktion, die durch die erste Netzwerkschnittstelle (114, 214, 314) bereitgestellt wird, wenn erfasst wird, dass die erste Netzwerkschnittstelle (114, 214, 314) das Netzwerksignal empfängt; und
Ausgeben einer Benachrichtigungsnachricht und Deaktivieren der zweiten Netzwerkschnittstelle (126, 226, 326), wenn erfasst wird, dass die erste Netzwerkschnittstelle (114, 214, 314) das Netzwerksignal nicht empfängt und die zweite Netzwerkschnittstelle (126, 226, 326) das Netzwerksignal empfängt.

## Revendications

1. Module d'expansion (100, 200, 300) pour fournir des fonctions d'expansion pour un dispositif électronique mobile (10), comprenant :
un dispositif de cloud (110, 210, 310) comprenant une première interface de bus expansion (112, 212, 312) et une première interface de réseau (114, 214, 314), dans lequel le dispositif de cloud (110, 210, 310) fournit une fonction de réseau par l'intermédiaire de la première interface de réseau (114, 214, 314), et fournit au moins un premier dispositif périphérique (132_1, 132_2, 132_n, 232_1, 232_2, 232_3, 232_4) au dispositif électronique mobile (10) pour une utilisation par l'intermédiaire de la première interface de bus d'expansion (112, 212, 312) ou de la première interface de réseau (114, 214, 314) ; et
un premier dispositif d'expansion (120, 220, 320), comprenant au moins un deuxième dispositif périphérique (128, 228, 328), une deuxième interface de bus d'expansion (122, 222, 322), une troisième interface de bus d'expansion (124, 224, 324) et une deuxième interface de réseau (126, 226, 326), la deuxième interface de bus d'expansion (122, 222, 322) étant couplée au deuxième dispositif périphérique (128, 228, 328), à la troisième interface de bus d'expansion (124, 224, 324) et à la deuxième interface de réseau (126, 226, 326), et étant utilisée pour se coupler au dispositif électronique mobile (10), la troisième interface de bus d'expansion (124, 224, 324) étant utilisée pour se coupler à la première interface de bus d'expansion (112, 212, 312) et à la première interface de réseau (114, 214, 314) du dispositif de cloud (110, 210, 310), dans lequel le premier dispositif d'expansion (120, 220, 320) fournit la fonction de réseau par l'intermédiaire de la deuxième interface de réseau (126, 226, 326), et fournit le deuxième dispositif périphérique (128, 228, 328) au dispositif électronique mobile (10) pour une utilisation par l'intermédiaire de la deuxième interface de bus d'expansion (122, 222, 322) ; le dispositif électronique mobile (10) détecte la première interface de réseau (114, 214, 314) et la deuxième interface de réseau (126, 226, 326) et instruit au module d'expansion (100, 200, 300) de fournir la fonction de réseau au dispositif électronique mobile (10) pour une utilisation par l'intermédiaire de la première interface de réseau (114, 214, 314) ou de la deuxième interface de réseau (126, 226, 326) ;
dans lequel le dispositif électronique mobile (10) utilise la fonction de réseau fournie par la première interface de réseau (114, 214, 314) du dispositif de cloud (110, 210, 310) lorsque la première interface de réseau (114, 214, 314) et la deuxième interface de réseau (126, 226, 326) sont simultanément détectées par le dispositif électronique mobile.

2. Module d'expansion (100, 200, 300) selon la revendication 1, dans lequel le dispositif électronique mobile (10) utilise la fonction de réseau fournie par celle détectée de la première interface de réseau (114, 214, 314) et de la deuxième interface de réseau (126, 226, 326) lorsque l'une de la première interface de réseau (114, 214, 314) et de la deuxième interface de réseau (126, 226, 326) est détectée par le dispositif électronique mobile ; le dispositif électronique mobile (10) détecte à répétition la première interface de réseau (114, 214, 314) du dispositif de cloud (110, 210, 310) et la deuxième interface de réseau (126, 226, 326) lorsque la première interface de réseau (114, 214, 314) et la deuxième interface de réseau (126, 226, 326) ne sont pas détectées.

3. Module d'expansion (100, 200, 300) selon la revendication 2, dans lequel le dispositif électronique mobile (10) détecte en outre si la première interface de réseau (114, 214, 314) et la deuxième interface de réseau (126, 226, 326) reçoivent un signal de réseau lorsque le dispositif électronique mobile (10) détecte simultanément la première interface de réseau (114, 214, 314) et la deuxième interface de réseau (126, 226, 326), dans lequel le dispositif électronique mobile (10) émet un message de notification et désactive la deuxième interface de réseau (126, 226, 326) lorsque le dispositif électronique mobile (10) détecte que la première interface de réseau (114, 214, 314) ne reçoit pas le signal de réseau et la deuxième interface de réseau (126, 226, 326) reçoit le signal de réseau.

4. Module d'expansion (100, 200, 300) selon la revendication 2, dans lequel le dispositif de cloud (110, 210, 310) comprend en outre un couvercle (St), le couvercle (St) étant utilisé pour recouvrir un port de connexion de réseau (NP2) de la deuxième interface de réseau (126, 226, 326) lorsque le dispositif de cloud (110, 210, 310) et le premier dispositif d'expansion (120, 220, 320) sont couplés l'un à l'autre.

5. Module d'expansion (100, 200, 300) selon la revendication 1, dans lequel le dispositif de cloud (110, 210, 310) comprend en outre une quatrième interface de bus d'expansion (216), et le module d'expansion (100, 200, 300) comprend en outre :
au moins un deuxième dispositif d'expansion (230_1, 230_2), chacun de l'au moins un deuxième dispositif d'expansion (230_1, 230_2) comprenant une cinquième interface de bus d'expansion (234_1, 234_2), et l'au moins un deuxième dispositif d'expansion (230_1, 230_2) comprenant une portion ou l'intégralité de l'au moins un premier dispositif périphérique (132_1, 132_2, 132_n, 232_1, 232_2, 232_3, 232_4), dans lequel la quatrième interface de bus d'expansion (216) et chacune de la cinquième interface de bus d'expansion (234_1, 234_2) sont couplées en guirlande, et chacune de la cinquième interface de bus d'expansion (234_1, 234_2) est couplée au premier dispositif périphérique (132_1, 132_2, 132_n, 232_1, 232_2, 232_3, 232_4) du deuxième dispositif d'expansion correspondant (230_1, 230_2), dans lequel la première interface de bus d'expansion (112, 212, 312), la troisième interface de bus d'expansion (124, 224, 324), la quatrième interface de bus d'expansion (216) et la cinquième interface de bus d'expansion (234_1, 234_2) prennent en charge une norme de bus d'expansion identique.

6. Module d'expansion (100, 200, 300) selon la revendication 1, dans lequel la deuxième interface de bus d'expansion (122, 222, 322) convertit des signaux passant entre des normes de bus d'expansion prises en charge par la deuxième interface de bus d'expansion (122, 222, 322) et la troisième interface de bus d'expansion (124, 224, 324) pour fournir le premier dispositif périphérique (132_1, 132_2, 132_n, 232_1, 232_2, 232_3, 232_4) au dispositif électronique mobile (10) pour une utilisation, dans lequel un débit de transmission de la deuxième interface de bus d'expansion (122, 222, 322) est supérieur à des débits de transmission de la première interface de bus d'expansion (112, 212, 312) et de la troisième interface de bus d'expansion (124, 224, 324).

7. Module d'expansion (100, 200, 300) selon la revendication 6, dans lequel le débit de transmission de la troisième interface de bus d'expansion (124, 224, 324) est supérieur aux débits de transmission de la première interface de réseau (114, 214, 314) et de la deuxième interface de réseau (126, 226, 326).

8. Module d'expansion (100, 200, 300) selon la revendication 1, dans lequel la première interface de réseau (114, 214, 314) comprend :
une sixième interface de bus d'expansion (EBI) couplée à la troisième interface de bus d'expansion (124, 224, 324) du premier dispositif d'expansion (120, 220, 320), convertissant des signaux passant entre une norme de bus d'expansion prise en charge par la troisième interface de bus d'expansion (124, 224, 324) et une norme de réseau prise en charge par la première interface de réseau (114, 214, 314) ; et
un concentrateur de réseau ou un commutateur de réseau (NSW), couplé à la sixième interface de bus d'expansion (EBI), comprenant un port de connexion de réseau (NP1) pour le dispositif de cloud (110, 210, 310) à coupler au dispositif électronique mobile (10) par l'intermédiaire du port de connexion de réseau (NP1) et à un réseau de cloud (CN) ; le dispositif de cloud (110, 210, 310) comprenant en outre :
un processeur (218), couplé au concentrateur de réseau ou au commutateur de réseau (NSW), et couplé à la première interface de bus d'expansion (112, 212, 312) ; le processeur (218) fournissant le premier dispositif périphérique (132_1, 132_2, 132_n, 232_1, 232_2, 232_3, 232_4) au dispositif électronique mobile (10) pour une utilisation par l'intermédiaire du concentrateur de réseau ou du commutateur de réseau (NSW) lorsque le dispositif de cloud (110, 210, 310) est couplé au dispositif électronique mobile (10) par l'intermédiaire du port de connexion de réseau (NP1) et du réseau de cloud (CN) ; le processeur (218) fournissant le premier dispositif périphérique (132_1, 132_2, 132_n, 232_1, 232_2, 232_3, 232_4) au dispositif électronique mobile (10) pour une utilisation par l'intermédiaire de la première interface de bus d'expansion (112, 212, 312) lorsque le dispositif de cloud (110, 210, 310) est couplé au dispositif électronique mobile (10) par l'intermédiaire de la première interface de bus d'expansion (112, 212, 312).

9. Module d'expansion (100, 200, 300) selon la revendication 8, dans lequel le dispositif de cloud (110, 210, 310) comprend en outre l'au moins un premier dispositif périphérique (132_1, 132_2, 132_n, 232_1, 232_2, 232_3, 232_4), l'au moins un premier dispositif périphérique (132_1, 132_2, 132_n, 232_1, 232_2, 232_3, 232_4) étant couplé au processeur (218).

10. Procédé de commande d'un module d'expansion (100, 200, 300) selon l'une des revendications 1 à 9, le procédé de commande comprenant :
la détection d'une première interface de réseau (114, 214, 314) du dispositif de cloud (110, 210, 310) et d'une deuxième interface de réseau (126, 226, 326) du premier dispositif d'expansion (120, 220, 320) ; et
l'instruction au module d'expansion (100, 200, 300) de fournir une fonction de réseau par l'intermédiaire de la première interface de réseau (114, 214, 314) ou de la deuxième interface de réseau (126, 226, 326) en fonction d'un résultat de la détection, dans lequel le résultat de la détection comprend que la première interface de réseau (114, 214, 314) et la deuxième interface de réseau (126, 226, 326) sont détectées, l'une de la première interface de réseau (114, 214, 314) et de la deuxième interface de réseau (126, 226, 326) est détectée, et la première interface de réseau (114, 214, 314) et la deuxième interface de réseau (126, 226, 326) ne sont pas détectées ; et
dans lequel l'étape de l'instruction au module d'expansion (100, 200, 300) de fournir la fonction de réseau par l'intermédiaire de la première interface de réseau (114, 214, 314) ou de la deuxième interface de réseau (126, 226, 326) en fonction du résultat de la détection comprend :
l'utilisation de la fonction de réseau fournie par la première interface de réseau (114, 214, 314) du dispositif de cloud (110, 210, 310) lorsque la première interface de réseau (114, 214, 314) et la deuxième interface de réseau (126, 226, 326) sont simultanément détectées.

11. Procédé de commande du module d'expansion (100, 200, 300) selon la revendication 10, dans lequel l'étape de l'instruction au module d'expansion (100, 200, 300) de fournir la fonction de réseau par l'intermédiaire de la première interface de réseau (114, 214, 314) ou de la deuxième interface de réseau (126, 226, 326) en fonction du résultat de la détection comprend en outre :
l'utilisation de la fonction de réseau fournie par celle détectée de la première interface de réseau (114, 214, 314) et de la deuxième interface de réseau (126, 226, 326) lorsque l'une de la première interface de réseau (114, 214, 314) et de la deuxième interface de réseau (126, 226, 326) est détectée ; et
l'exécution à répétition de l'étape de la détection de la première interface de réseau (114, 214, 314) du dispositif de cloud (110, 210, 310) et de la deuxième interface de réseau (126, 226, 326) du premier dispositif d'expansion (120, 220, 320) lorsque la première interface de réseau (114, 214, 314) et la deuxième interface de réseau (126, 226, 326) ne sont pas détectées.

12. Procédé de commande du module d'expansion (100, 200, 300) selon la revendication 11, dans lequel l'étape de l'utilisation de la fonction de réseau fournie par la première interface de réseau (114, 214, 314) lorsque la première interface de réseau (114, 214, 314) et la deuxième interface de réseau (126, 226, 326) sont simultanément détectées comprend :
la détection si la première interface de réseau (114, 214, 314) et la deuxième interface de réseau (126, 226, 326) reçoivent un signal de réseau ;
l'utilisation de la fonction de réseau fournie par la première interface de réseau (114, 214, 314) lors de la détection que la première interface de réseau (114, 214, 314) reçoit le signal de réseau ; et
l'émission d'un message de notification et la désactivation de la deuxième interface de réseau (126, 226, 326) lors de la détection que la première interface de réseau (114, 214, 314) ne reçoit pas le signal de réseau et la deuxième interface de réseau (126, 226, 326) reçoit le signal de réseau.
